# EUROPEAN PATENT APPLICATION

(11) **EP 2 570 549 A1**
(43) Date of publication of application: **20.03.2013**
(21) Application number: 11181138.6
(22) Date of filing: 13.09.2011
(51) Int. Cl.: D21F 5/02, D21G 1/02

(54) **Roller for heating a web of paper or fabric**

(71) Applicant: Quantum Technologie GmbH, 82152 Krailling (DE)
(72) Inventor: Chan, Ki, Wanchai Hongkong (HK); Qu, Yu Zhi, Wanchai Hongkong (HK)
(74) Representative: Lohr, Georg

(57) **Abstract**

A heated roller (1) for heating a paper web or fabric web with a cylindrical roller shell (44), a front side (41) and a rear side (42) permits a homogenous temperature on its surface if the cylindrical roller shell (44) surrounds an inner roller shell (46) thereby forming a ring like or at least one ring segment like hollow space (45) between the cylindrical roller shell (44) and the inner roller shell (46) and if at least one heat source (60) is inserted in the hollow space (45).

## Description

### Field of the invention

The invention relates to a roller for heating a web of paper or fabric with a cylindrical roller shell, a front side and a rear side and a rotational axis. The cylindrical roller shell is heated by at least one heat source.

### Description of the related art

In paper and fabric industry wet paper web or a wet fabric web, respectively, are transported through a drying section to remove excess water from the paper web or fabric web. In the drying section the web travels over heated drum dryers which are as well called rollers. The rollers are typically heated with steam. Such a roller is e.g. disclosed in the patent application DE 10 2005 043 734 A1. Supplying the rollers with steam is expensive and the humidity provided by the steam is difficult to handle in the drums. Further, it is difficult to provide a homogenous surface temperature of the roller. The humidity problem can be solved by using heated oil instead of steam, but the other shortcomings remain unresolved.

A different approach is disclosed in the US-patent publication 5,666,744: The wet paper web is transferred to a fabric conveyor sheet and travels though a drying unit. In the drying unit the wet paper web on the fabric sheet is exposed to infrared light emitted by infrared units positioned along the traveling path of the wet paper web. At the same time the moisture is removed by vacuum units positioned on the opposite site of fabric sheet from the infrared unit. This permits to combine heat drying and vacuum drying.

The international patent application published as WO 2010/020485 A1 suggests to dry a wet paper web by micro waves. The paper web crosses a gap between opposed rollers multiple times. In the gap the wet paper web is exposed to the micro waves. This method has the shortcoming that the paper web has to travel the gap multiple times and that it is difficult to provide an homogeneous micro wave filed within the gap. Further, the gap must be perfectly shielded against leaking radiation.

### Summary of the invention

The problem to be solved by the invention is to provide a simple and at the same time efficient drying station for a web of paper or fabric, subsequently briefly referred to as "web".

Solutions of the problem are described in the independent claims. The dependent claims relate to advantageous embodiments of the invention.

The roller of claim 1 comprises at least a cylindrical roller shell, a front side and a rear side and has a rotational axis. The cylindrical roller shell surrounds an inner roller shell and forms thereby a ring like or at least one ring segment like hollow space between the cylindrical roller shell and the inner roller shell. In the hollow space between the cylindrical outer roller shell and the inner roller shell is at least one heat source. This construction permits a light weight and however stable roller which can thus quickly be accelerated or stopped, due to its low moment of inertia. The heat sources can be almost freely arranged within the hollow space and thereby a uniform temperate on the roller's surface can be maintained. The hollow space can be coated with inorganic salts and evacuated to enhance the heat conductivity of the opposed surfaces of the hollow space, e.g. like it is described in the patents US 6,132,823, US 6,911,231, US 6916,430, US 6811720 and the application US2005/0056807, which are incorporated by reference as if fully disclosed herein. This permits at least an almost perfect homogenous heat distribution.

In a preferred embodiment at least one heat source is at least one slab like electrical heater element, which is thermally connected to the at least one inner roller shell. This permits to arrange the heater elements preferably evenly spaced and circumferentially of the inner shell and thereby further enhance the heat distribution on the cylinder's surface.

For example, in a preferred embodiment the heat source comprises multiples lab like electrical heater elements, being arranged in parallel to each other on the outer surface of the inner roller shell and in parallel to the rotational axis of the roller.

In a preferred embodiment the inner roller shell has at least one recess for the at least one heat source. This permits an optimized heat transfer between the heat source and the inner roller shell and as well a good heat transfer between the inner shell and the cylindrical roller shell due to a reduced average distance between the inner shell and the cylinder.

If the heat source is inserted from the front and/or rear side of the drum into the hollow space it can be efficiently supplied with energy, preferably electricity, and can be replaced quickly in case of failure.

The inner roller shell is preferably reinforced by least one ring with an outer narrow side and an inner narrow side, wherein the outer narrow side statically contacts the inner side of the inner roller shell. This stabilizes the roller, without significant increase of weight.

The roller is further stabilized if the cylindrical roller shell and the inner roller shell are attached to disks at the front and the rear side of the roller.

In a preferred embodiment the roller has roller shaft, which supports at least one slip ring, the latter being electrically connected with the at least one heat source for supplying electric energy to the at least one heat source.

Preferably the roller shaft has two halves, each being shorter than the width of the roller, one of which is mounted at the facing sides, i.e. the front and the rear side, respectively, of the roller. This permits a simple support of the roller e.g. by standard bearings without significant increase of the moment of inertia of the roller.

### Description of Drawings

In the following the invention will be described by way of example, without limitation of the general inventive concept, on examples of embodiment with reference to the drawings.
Figure 1 shows a cross section of roller.
Figure 2 shows a detail of Fig. 1.
Figure 3 shows a view on the front side of the roller
Figure 4 shows a view of a disk to be mounted at the rear side of the roller

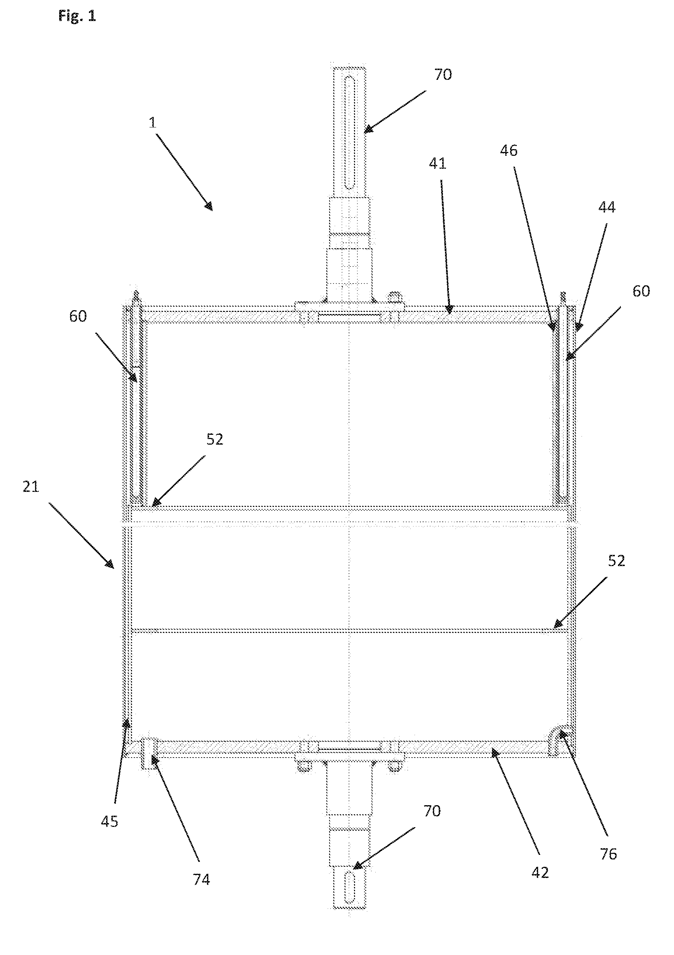

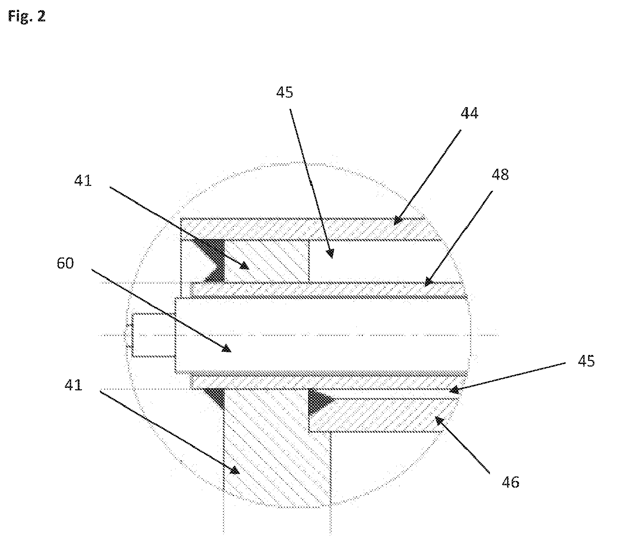

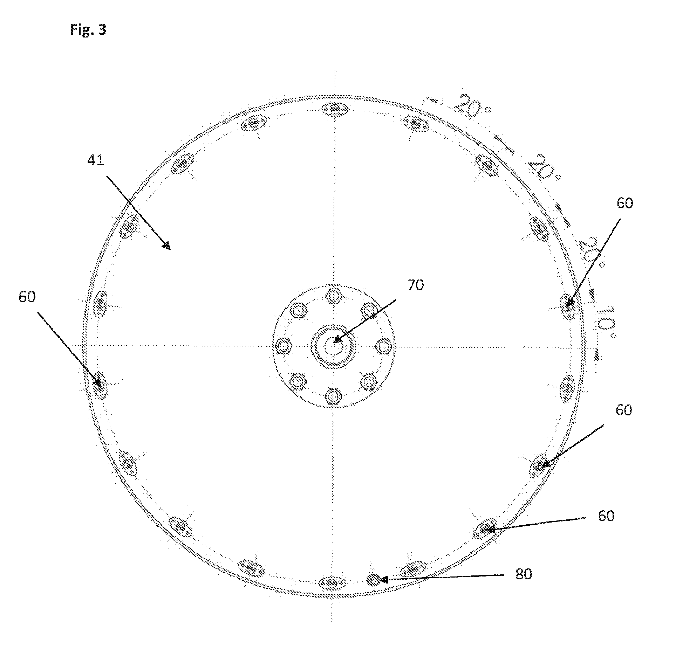

The roller 1 has the shape of a hollow cylinder with a cylinder surface 21 as rest for a paper web (not shown). Both facing sides of the hollow cylinder are at least essentially closed by a front disk 41 and rear disk 42. The parallel disks 41, 42 support a cylindrical roller shell 44 (cf. Fig. 1). The cylindrical roller shell 44 encloses an inner roller shell 46. The inner roller shell 46 is spaced in a radial direction from the cylindrical roller shell 44.The the inner roller shell 46, the cylindrical roller shell 44 and the two disks 41, 42 form a ring like hollow space 45. The outer diameter of the hollow space 45 is defined by the inner surface of the cylindrical roller shell 44. The inner diameter of the hollow space 45 is defined by the adjacent surface of the inner roller shell and is reduced by a step from the front to the rear, i.e. it has two sections with different diameters. The wider section permits insertion of casings 48 as compartments for electrical heater elements 60. The electrical heater elements 60 are inserted from the front side and extend through the front disk 41 with their electrical connectors (cf. Fig. 2, Fig. 3).

Preferably the surfaces enclosing the hollow space 45 is coated as disclosed in the patents US 6,132,823, US 6,911,231, US 6916,430, US 6811720 and the application US2005/0056807, which are incorporated by reference as if fully disclosed herein. The coating fluid can be inserted into the hollow space 45 through a tube 76. Subsequent to the coating process the hollow space is preferably evacuated as well via tube 76. The tube 76 can as well be used for testing the structural integrity of the hollow space under extremely low and/or high pressures. Of course the tube 76 can be closed, e.g. by a bolt and/or a valve.

The inner roller shell is reinforced by rings like 52 with an outer narrow side and an inner narrow side, wherein the outer narrow side statically contacts the inner side of the inner roller shell 46 and thereby stabilizes the roller 1 without significant increase of weight and thus without significant moment of inertia. The difference d between the inner and the outer diameters of the rings 52 is smaller than 1/3 of the radius r of the cylindrical roller 44, more preferably smaller than 1/4 of the radius r of the cylindrical roller 44.

From both disks 41, 42 extends a half of a roller shaft 70, flanged to the respective disk 41, 42, which permit to bear the roller 1 in supporting frame (not shown). A temperature sensor 80 extends from the front disk 41 into the hollow space 45 (cf. Fig. 3) and permits a control unit to maintain the temperature at a defined value or interval.

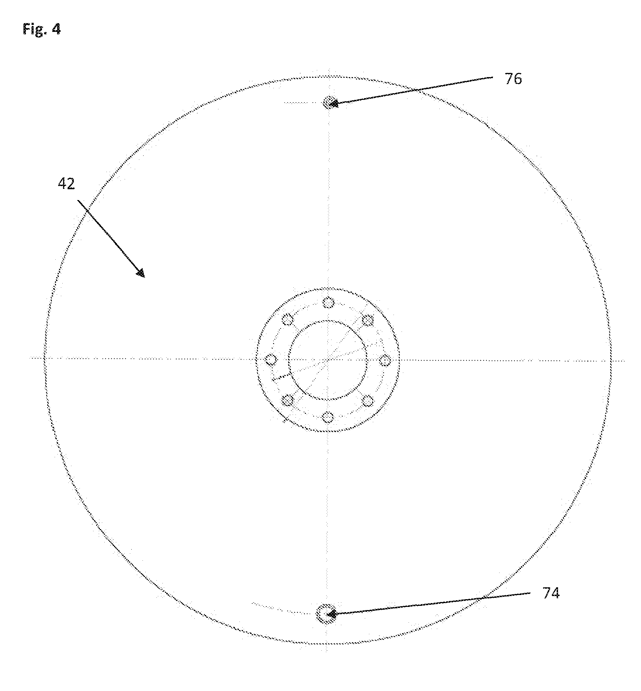

The rear disk 42 has an opening 74 to chamber 72 formed by the inner shell and the two disks 41, 42. The opening 74 ensures ventilation of the chamber 72, in addition the chamber can easily be inspected (cf. Fig. 1, 4).

### List of reference numerals

- 1: roller
- 21: roller surface
- 41: disk
- 42: disk
- 44: cylindrical roller shell
- 45: hollow space
- 46: inner roller shell
- 48: casing
- 52: ring
- 60: heat source / electrical heater
- 70: shaft
- 72: chamber
- 74: opening
- 76: tube
- 80: temperature sensor

## Claims

1. A heated roller (1) for heating a web of paper or fabric with a cylindrical roller shell (44), a front side and a rear side,
**characterized in that**
- the cylindrical roller shell (44) surrounds an inner roller shell (46) thereby forming a ring like or at least one ring segment like hollow space (45) between the cylindrical roller shell (44) and the inner roller shell (46),
- at least one heat source (60) is inserted in the hollow space (45).

2. The roller of claim 1
**characterized in that**
the at least one heat source (60) is at least one slab like electrical heater element, which is thermally connected to the at least one inner roller shell (46).

3. The roller of claim 2,
**characterized in that**
the heat source comprises multiple slab like electrical heater elements (60), being arranged in parallel to each other on the outer surface of the inner roller shell (46) and in parallel to a rotational axis of the roller (1).

4. The roller of one of claims 1 to 3,
**characterized in that**
the inner roller shell (46) has at least one casing (48), which extends from the front and/or rear side into the hollow space (45), supporting the at least one heat source.

5. The roller of one of claims 1 to 4
**characterized in that** the hollow space (45) is connected via a tube like connector (76) with the front and/or rear side of the roll.

6. The roller of one of claims 1 to 5
**characterized in that**
the heat source (60) is inserted from the front and/or rear side of the drum into the hollow space (45).

7. The roller of one of claims 1 to 6
**characterized in that**
the inner roller shell (46) is reinforced by least one ring (52) with an outer narrow side and an inner narrow side, wherein the outer narrow side statically contacts the inner side of the inner roller shell (46).

8. The roller of one of claims 1 to 7
**characterized in that**
the cylindrical roller shell (44) and the inner roller shell (46) are attached to disks (41, 42) at the front and the rear side of the roller (1).

9. The roller of one of the claims 1 to 8
**characterized in that**
the roller (1) has roller shaft (70) supporting at least one slipring, the latter being electrically connected with the at least one heat source for supplying electric energy to the at least one heat source (60).

10. The roller of one of the claims 1 to 9
**characterized in that**
the hollow space (60) is evacuated and **in that** the inner surface is coated with inorganic salts.
